# FASCICULE DE BREVET EUROPEEN

(11) **EP 2 728 299 B1**
(45) Date de publication et mention de la délivrance du brevet: **01.06.2016**
(21) Numéro de dépôt: 12190748.9
(22) Date de dépôt: 31.10.2012
(51) Int. Cl.: F41H 5/26, B60P 3/03

(54) **Cabine pour véhicule blindé avec meurtrière**
Kabine für gepanzertes Fahrzeug mit Schießscharte
Cabin for armoured vehicle with gun port

(43) Date de publication de la demande: 07.05.2014
(73) Titulaire: Vehixel Carrossier Constructeur, 01340 Attignat (FR)
(72) Inventeur: Lailler, Bernard, 01340 Attignat (FR); Chaillet, Grégory, 01370 Courmangoux (FR)
(74) Mandataire: Thibault, Jean-Marc

(56) Documents cités:
- JP-U- 55 010 004
- US-A- 1 791 701
- US-A- 3 566 742
- US-A- 4 771 673
- US-A- 4 892 345

## Description

La présente invention concerne le domaine technique des véhicules blindés au sens général et elle vise plus précisément la cabine de véhicules blindés destinés en particulier pour le transport de fonds ou de personnes.

D'une manière générale, un véhicule blindé comporte une carrosserie munie de parois blindées et de vitres pare-balle. La cabine d'un tel véhicule qui peut être isolée du reste du véhicule est aménagée pour présenter un poste de conduite et une place passager. Cette cabine présente un pare-brise blindé ou pare-balles comportant généralement une vitre gauche et une vitre droite. Ce pare-brise s'étend généralement dans un plan incliné entre des parois transversales supérieure et inférieure. Les parois transversales supérieure et inférieure se prolongent respectivement par le toit de la cabine et par un capot renforcé.

Pour certaines utilisations, un véhicule blindé comporte une ou plusieurs meurtrières pour permettre aux occupants de se défendre en cas d'attaque.

Chaque meurtrière comporte un obturateur commandé pour ouvrir ou fermer un passage pour une arme, aménagé dans une paroi de montage de la meurtrière. Il est ainsi prévu d'équiper la cabine par une meurtrière située à la base du montant central séparant les vitres gauche et droite. La position centrale de cette meurtrière présente l'avantage d'un accès proche aussi bien pour le passager que pour le conducteur.

Toutefois, cette meurtrière qui se trouve positionnée au niveau de la partie inférieure du pare-brise s'avère difficile d'accès car elle se trouve située au fond du tableau de bord. Le tableau de bord constitue ainsi un obstacle ne permettant pas aux occupants d'utiliser la meurtrière dans de bonnes conditions.

De manière complémentaire, la paroi de montage de la meurtrière nécessite de réduire le vitrage du pare-brise, au niveau de la base du montant central. Il s'ensuit en particulier pour le conducteur une gêne limitant son champ de vision.

Il est également connu par le document JP 55 010004 U, un dispositif d'ouverture et de fermeture de la plaque de protection d'un véhicule blindée. Cette plaque de protection est montée sur la partie haute du véhicule en n'étant pas centrée par rapport au pare-brise.

La présente invention vise à remédier aux inconvénients de l'art antérieur en proposant une nouvelle cabine pour véhicule blindé, équipé d'une meurtrière adaptée pour être accessible facilement et utilisable dans de bonnes conditions par les occupants tout en ne gênant pas l'ergonomie de conduite du véhicule.

Pour atteindre un tel objectif, la cabine pour véhicule blindé comporte :
- un pare-brise s'étendant dans un plan incliné entre une paroi transversale inférieure et une paroi transversale supérieure se prolongeant par le toit de la cabine,
- une meurtrière comportant une paroi de montage pour un obturateur commandé en ouverture/fermeture d'un passage aménagé dans ladite paroi, la meurtrière étant centrée, par rapport au pare-brise, caractérisée en ce que la meurtrière est montée au niveau de la paroi transversale supérieure.

De plus, la cabine selon l'invention peut présenter en outre en combinaison au moins l'une et/ou l'autre des caractéristiques additionnelles suivantes :
- la paroi de montage de la meurtrière s'étend selon un plan d'extension différent du plan d'extension incliné du pare-brise,
- le pare-brise comporte une vitre gauche et une vitre droite séparées par un montant central et en ce que la meurtrière est centrée par rapport au montant central,
- la paroi de montage de la meurtrière s'étend dans un plan d'extension faisant un angle de ± 15° par rapport à la verticale,
- la paroi de montage de la meurtrière comporte une vitre dans laquelle est aménagé le trou de passage,
- la paroi de montage de la meurtrière s'étend en retrait par rapport au pare-brise et se trouve raccordée au pare-brise par une paroi de raccordement,
- la paroi de raccordement s'évase à partir de la paroi de montage de la meurtrière,
- la paroi de raccordement s'étend jusqu'à l'extrémité supérieure du montant central et délimite des montants inclinés s'étendant à partir du montant central et formant une partie du cadre de montage pour les vitres gauche et droite,
- les montants inclinés s'étendent de manière symétrique par rapport au montant central,
- la meurtrière comporte une casquette de protection s'étendant en surplomb de la paroi de montage.

Un autre objet de l'invention est de proposer un véhicule blindé équipé d'une cabine conforme à l'invention.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue en perspective ¾ avant de la cabine d'un véhicule blindée conforme à l'invention.
La **Figure 2** est une vue en coupe élévation prise sensiblement selon les lignes II-II de la **Fig. 1****.**
La **Figure 3** est une vue du détail **I** de la **Fig. 2** en coupe montrant la meurtrière.
La **Figure 4** est une vue en perspective d'une autre variante de réalisation de la cabine blindée conforme à l'invention.

Tel que cela ressort des Figures, l'objet de l'invention concerne une cabine blindée **1** pour un véhicule blindé **2** dont une partie seulement est représentée sur les dessins. Le véhicule blindé **2** n'est pas décrit précisément dans la mesure où il est bien connu de l'homme du métier et peut être réalisé de différentes manières. Un tel véhicule **2** comporte de manière générale, un châssis supportant une carrosserie blindée et équipée de roues et d'un moteur. Un tel véhicule **2** est équipé de la cabine **1** qui fait l'objet plus précisément de l'invention.

La cabine **1** présente à l'avant, un pare-brise blindé **5** s'étendant entre une paroi transversale inférieure **6** et une paroi transversale supérieure **7.** La paroi transversale supérieure **7** se prolonge par le toit **9** de la cabine tandis que la paroi transversale inférieure **6** se prolonge par un capot **10** venant coiffer un bouclier ou pare-chocs **11.**

La cabine **1** comporte également à l'avant, de part et d'autre du capot **10,** des ailes **13** gauche et droite par rapport au sens de circulation du véhicule. Les ailes **13** se trouvent raccordées à des parois de côtés **14** pleines ou comme illustré, munies de vitres blindées.

La cabine **1** présente ainsi un volume intérieur **15** ou habitacle, aménagé pour constituer un poste de conduite et un poste passager. A cet effet, la cabine **1** est équipée en particulier d'un tableau de bord **16** muni des différents équipements pour le fonctionnement du véhicule. Cette cabine **1** est isolée ou non par une paroi de séparation par rapport à la caisse de chargement du véhicule. Bien entendu, les différentes parties constitutives de la carrosserie de cette cabine **1** sont blindées de toute manière appropriée.

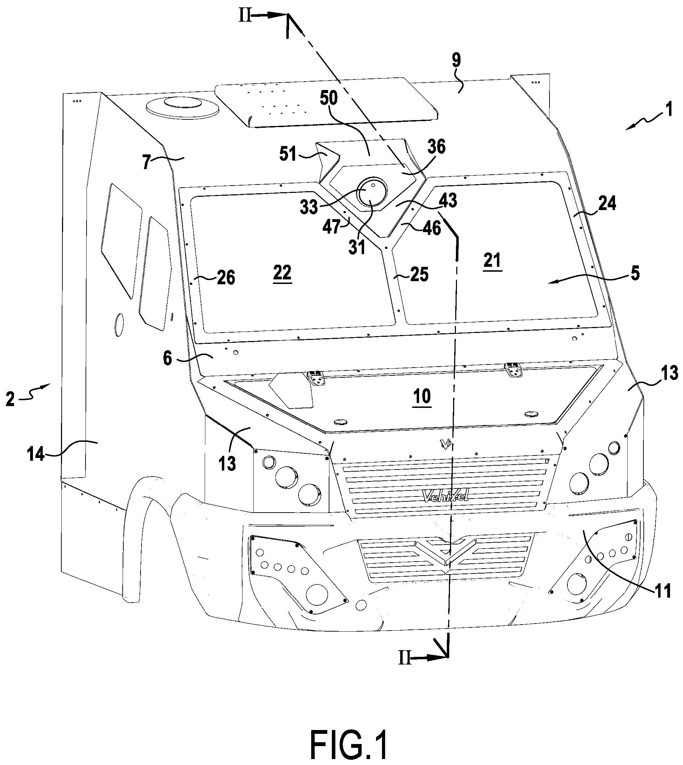

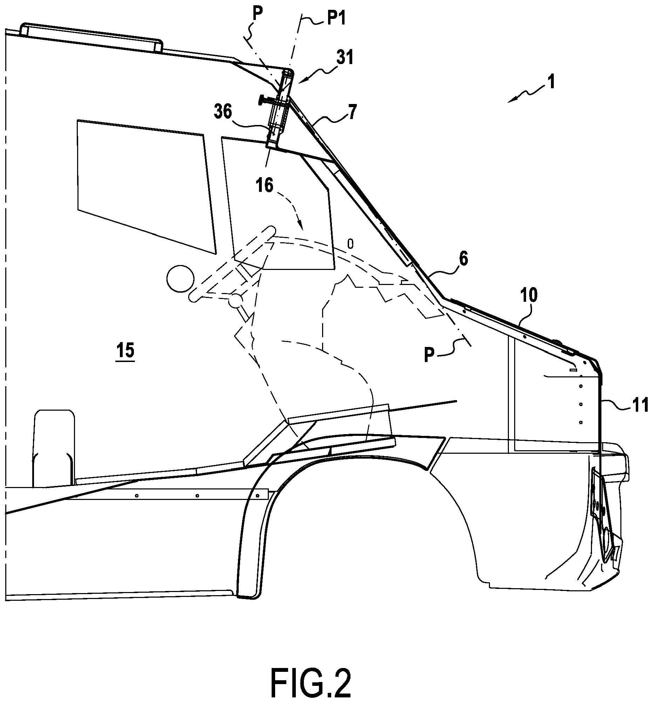

Tel que cela ressort plus précisément des **Fig. 1** et **2****,** le pare-brise blindé **5** s'étend dans un plan incliné **P** et comporte, dans l'exemple de réalisation illustrée sur ces figures, une vitre gauche **21** et une vitre droite **22,** blindées. La vitre gauche **21** est délimitée entre un montant gauche **24** et un montant central **25** qui délimitent également la vitre droite **22** bordée par un montant droit **26.** Les montants gauche **24** et droit **26** assurent la liaison entre les parois transversales inférieure **6** et supérieure **7.** Généralement, les vitres gauche **21** et droite **22** possèdent des formes et des dimensions identiques. Ainsi, tel que cela ressort de la **Fig. 1****,** les vitres gauche **21** et droite **22** sont symétriques par rapport au montant central **25.**

Conformément à l'invention, la cabine **1** comporte une meurtrière **31** comportant un support de montage **32** pour un obturateur commandé **33** adapté pour fermer et ouvrir un passage **35** aménagé dans le support de montage **32.** Le support de montage **32** est monté par tous moyens appropriés sur une paroi de montage **36.** Dans l'exemple illustré, l'obturateur **33** est un volet monté pivotant selon un axe déporté **37** qui est muni d'un bouton de manoeuvre **39** s'étendant à l'intérieur de l'habitacle **15.** L'obturateur **33** présente bien entendu, une forme complémentaire à celle du passage **35** qui dans l'exemple illustré est de section circulaire. Bien entendu, la forme du passage **35** pour une arme peut être différente. De même, l'obturateur **33** peut être monté non pas rotatif mais en coulissement.

Selon une caractéristique de l'invention, la meurtrière **31** est montée au niveau de la paroi transversale supérieure **7,** en étant centrée par rapport au pare-brise **5.** Tel que cela ressort de la **Fig. 1****,** la meurtrière **31** est ainsi positionnée dans la partie supérieure du pare-brise **5** et dans la partie centrale de ce dernier.

Selon une variante préférée de réalisation, la paroi de montage **36** de la meurtrière **31** est montée pour s'étendre selon un plan d'extension **P1** qui est différent du plan d'extension **P** du pare-brise **5.** Selon une caractéristique avantageuse de réalisation, la paroi de montage **36** de la meurtrière s'étend dans un plan d'extension **P1** qui fait un angle **a** de plus ou moins de 15° par rapport à la verticale **G.** Une telle disposition confère au passage **35** de l'arme, une orientation adaptée pour permettre aux occupants de riposter selon un champ d'intervention optimisé.

Selon une variante avantageuse de réalisation, la paroi de montage **36** est une vitre bien entendu blindée, à travers laquelle l'environnement extérieur du véhicule peut être observé, en particulier pour aider l'occupant à orienter son arme à travers le passage **35.** De préférence, la meurtrière **31** est montée pour être entourée sur toute sa périphérie par le vitrage de la paroi de montage autorisant une observation en tout endroit du pourtour de la meurtrière **31.**

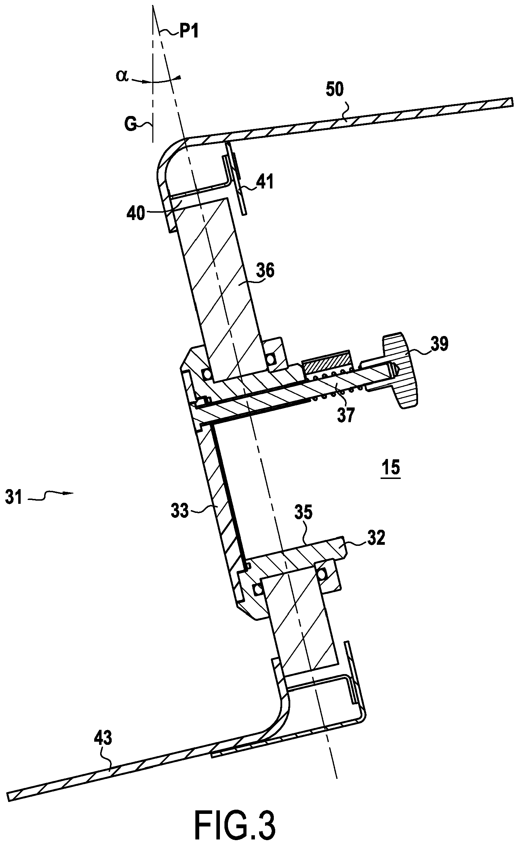

Le montage de la paroi de montage **36** sur la carrosserie peut être réalisé de toute manière appropriée. Tel que cela ressort plus précisément de la **Fig. 3****,** la paroi transversale supérieure **7** présente une feuillure **40** dans laquelle vient en appui la paroi de montage **36** qui est fixée à l'aide d'un cadre **41.**

Dans l'exemple préféré décrit ci-dessus, la paroi de montage **36** de la meurtrière **31** est une vitre. Il est à noter que la meurtrière **31** peut être aménagée sur une paroi de montage **36** pleine non transparente, faisant partie de la carrosserie blindée de la cabine.

Tel que cela ressort de l'exemple de réalisation des **Fig. 1** à **3****,** la paroi de montage **36** de la meurtrière s'étend en retrait par rapport au pare-brise **5.** En d'autres termes, le plan d'extension **P1** de la paroi de montage **36** est situé en arrière par rapport au pare-brise **5.** Tel que ressort de la **Fig. 1****,** la paroi de montage **36** se trouve raccordée au pare-brise **5** à l'aide d'une paroi de raccordement **43.** Cette paroi de raccordement **43** s'étend jusqu'à l'extrémité supérieure du montant central **25** et de manière à délimiter, deux montants inclinés **46** et **47** respectivement gauche et droite s'étendant à partir du montant central **25** et formant une partie du cadre de montage pour les vitres respectivement gauche **21** et droite **22.**

Ainsi, tel que cela ressort clairement de la **Fig. 1****,** le montant central **25** s'élève directement à partir de la paroi transversale inférieure **6** sur une partie seulement de la hauteur du pare-brise **5** de sorte que l'extrémité supérieure du montant central **25** se trouve raccordée à la paroi transversale supérieure **7** par les montants inclinés **46, 47.**

De préférence, les montants inclinés **46, 47** s'étendent de manière symétrique par rapport au montant central **25** de manière à présenter ensemble une forme en **Y.** Ainsi, les vitres gauche **21** et droite **22** sont amputées dans leur coins supérieurs respectivement droit et gauche, d'une zone non vitrée correspondant à un triangle.

Il est à noter que la restriction de la partie vitrée du pare-brise **5,** dans sa partie supérieure centrale n'affecte pratiquement pas le champ de vision des occupants et en particulier du conducteur. Par ailleurs, le positionnement en partie haute du pare-brise offre l'avantage aux occupants de pouvoir utiliser la meurtrière **31** en position debout et en retrait par rapport au tableau de bord **16** qui ne gêne pas l'accès à de la meurtrière **31.** En effet, tel que cela ressort de la **Fig. 2****,** la meurtrière **31** s'étend à l'intérieur de l'habitacle **15** sensiblement à l'aplomb de la partie avant du tableau de bord **16.**

Selon une caractéristique avantageuse de réalisation, la paroi de raccordement **43** s'évase à partir de la paroi de montage **36** de la meurtrière, jusqu'au niveau des montants inclinés **46, 47.**

Selon une variante avantageuse de réalisation, la meurtrière **31** est pourvue d'une casquette de protection **50** s'étendant en surplomb de la paroi de montage **36** pour venir se raccorder au toit **9** de la cabine. La casquette de protection **50** est pourvu de part et d'autre de deux parois de retombée **51** venant s'épanouir jusqu'au pare-brise **5.**

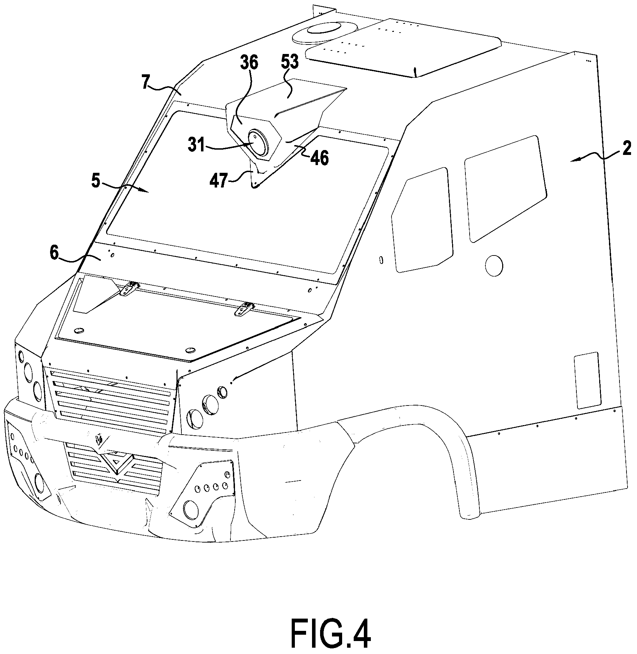

Dans l'exemple de réalisation illustré à la **Fig. 1**, le pare-brise **5** comporte une vitre gauche **21** et une vitre droite **22** séparées par un montant central **25.** Il est à noter que l'objet de l'invention peut être mis en oeuvre avec un pare-brise **5** comportant un vitrage blindé monobloc. Ainsi, il peut être envisagé que le pare-brise **5** de la variante de réalisation illustrée aux **Fig. 1** à **3** ne comporte pas le montant central **25.** La **Fig. 4** illustre une cabine dont le pare-brise **5** ne comporte pas de montant central **25.**

Dans l'exemple illustré aux **Fig. 1** à **3****,** la meurtrière **31** est aménagée au fond d'un renfoncement ou d'une niche de sorte que la meurtrière s'étend en retrait ou en enfoncement par rapport au pare-brise **5.**

**La** **Fig. 4** illustre une autre variante de réalisation de l'invention selon laquelle la meurtrière **31** s'étend en saillie par rapport au pare-brise **5.** La meurtrière **31** est montée au niveau de la paroi transversale supérieure **7** en étant avancée par rapport au pare-brise **5.** La paroi transversale supérieure **7** est ainsi pourvue dans sa partie centrale, d'une paroi de raccordement **53** réalisée sous la forme d'un tunnel saillant par rapport à la paroi transversale supérieure **7** et au pare-brise **5.** Le fond ou la partie avant de cette paroi de raccordement **53** est munie de la paroi de montage **36** de la meurtrière **31.** Cette paroi de raccordement **53** se raccorde ainsi en partie aux montants inclinés **46, 47** du pare-brise **5** et à la paroi transversale supérieure **7.** La cabine selon cette forme de réalisation présente bien entendu l'une et/ou l'autre des autres caractéristiques mentionnées en relation de la variante de réalisation illustrée aux **Fig. 1** à **3****.**

## Revendications

1. Cabine pour véhicule blindé, comportant :
- un pare-brise **(5)** s'étendant dans un plan incliné **(P)** entre une paroi transversale inférieure **(6)** et une paroi transversale supérieure **(7)** se prolongeant par le toit de la cabine,
- une meurtrière **(31)** montée au niveau de la paroi transversale supérieure **(7)** et comportant une paroi de montage **(36)** pour un obturateur **(33)** commandé en ouverture/fermeture d'un passage **(35)** aménagé dans ladite paroi,
**caractérisée en ce que** la meurtrière **(31)** est centrée, par rapport au pare-brise **(5)** et **en ce que** la paroi de montage **(32)** de la meurtrière **(31)** s'étend selon un plan d'extension (**P1**) différent du plan d'extension (**P**) incliné du pare-brise.

2. Cabine pour véhicule blindé selon la revendication 1, **caractérisée en ce que** le pare-brise **(5)** comporte une vitre gauche **(21)** et une vitre droite **(22)** séparées par un montant central **(25)** et **en ce que** la meurtrière **(31)** est centrée par rapport au montant central **(25).**

3. Cabine pour véhicule blindé selon l'une des revendications 1 à 2, **caractérisée en ce que** la paroi de montage **(36)** de la meurtrière **(31)** s'étend dans un plan d'extension (**P1**) faisant un angle de ± 15° par rapport à la verticale.

4. Cabine pour véhicule blindé selon la revendication 1 à 3, **caractérisée en ce que** la paroi de montage **(36)** de la meurtrière **(31)** comporte une vitre dans laquelle est aménagé le trou de passage **(35).**

5. Cabine pour véhicule blindé selon l'une des revendications 1 à 4, **caractérisée en ce que** la paroi de montage **(36)** de la meurtrière **(31)** s'étend en retrait par rapport au pare-brise **(5)** et se trouve raccordée au pare-brise **(5)** par une paroi de raccordement **(43).**

6. Cabine pour véhicule blindé selon la revendication 5, **caractérisée en ce que** la paroi de raccordement **(43)** s'évase à partir de la paroi de montage **(32)** de la meurtrière **(31).**

7. Cabine pour véhicule blindé selon l'une des revendications 5 à 6, **caractérisée en ce que** la paroi de raccordement **(43)** s'étend jusqu'à l'extrémité supérieure du montant central **(25)** et délimite des montants inclinés **(46, 47)** s'étendant à partir du montant central **(25)** et formant une partie du cadre de montage pour les vitres gauche **(21)** et droite **(22).**

8. Cabine pour véhicule blindé selon la revendication 7, **caractérisée en ce que** les montants inclinés **(46, 47)** s'étendent de manière symétrique par rapport au montant central **(25).**

9. Cabine pour véhicule blindé selon l'une des revendications précédentes, **caractérisée en ce que** la meurtrière **(31)** comporte une casquette de protection **(50)** s'étendant en surplomb de la paroi de montage **(36).**

10. Véhicule blindé **caractérisé en ce qu'**il est équipé d'une cabine **(1)** conforme à l'une des revendications 1 à 9.

## Patentansprüche

1. Kabine für ein gepanzertes Fahrzeug, umfassend:
- eine Windschutzscheibe (5), die sich in einer geneigten Ebene (P) zwischen einer unteren Querwand (6) und einer oberen Querwand (7), die sich durch das Dach der Kabine verlängert, erstreckt,
- eine Schießscharte (31), die im Bereich der oberen Querwand (7) montiert ist und eine Montagewand (36) für ein Verschlusselement (33) umfasst, das im Hinblick auf das Öffnen/Schließen eines in der Wand angeordneten Durchgangs (35) gesteuert wird,
**dadurch gekennzeichnet, dass** die Schießscharte (31) in Bezug zu der Windschutzscheibe (5) zentriert ist, und dass sich die Montagewand (32) der Schießscharte (31) in einer Ausdehnungsebene (P1) erstreckt, die sich von der geneigten Ausdehnungsebene (P) der Windschutzscheibe unterscheidet.

2. Kabine für ein gepanzertes Fahrzeug nach Anspruch 1, **dadurch gekennzeichnet, dass** die Windschutzscheibe (5) eine linke (21) Scheibe und eine rechte Scheibe (22) umfasst, die durch einen zentralen Balken (25) getrennt sind, und dass die Schießscharte (31) in Bezug zu dem zentralen Balken (25) zentriert ist.

3. Kabine für ein gepanzertes Fahrzeug nach einem der Ansprüche 1 bis 2, **dadurch gekennzeichnet, dass** sich die Montagewand (36) der Schießscharte (31) in einer Ausdehnungsebene (P1) erstreckt, die einen Winkel von ± 15° zur Vertikalen bildet.

4. Kabine für ein gepanzertes Fahrzeug nach Anspruch 1 bis 3, **dadurch gekennzeichnet, dass** die Montagewand (36) der Schießscharte (31) eine Scheibe umfasst, in der das Durchgangsloch (35) vorgesehen ist.

5. Kabine für ein gepanzertes Fahrzeug nach einem der Ansprüche 1 bis 4, **dadurch gekennzeichnet, dass** sich die Montagewand (36) der Schießscharte (31) zur Windschutzscheibe (5) zurückgesetzt erstreckt und an die Windschutzscheibe (5) durch eine Anschlusswand (43) angeschlossen ist.

6. Kabine für ein gepanzertes Fahrzeug nach Anspruch 5, **dadurch gekennzeichnet, dass** sich die Anschlusswand (43) von der Montagewand (32) der Schießscharte (31) aus erweitert.

7. Kabine für ein gepanzertes Fahrzeug nach einem der Ansprüche 5 bis 6, **dadurch gekennzeichnet, dass** sich die Anschlusswand (43) bis zum oberen Ende des zentralen Balkens (25) erstreckt und geneigte Balken (46, 47) begrenzt, die sich von dem zentralen Balken (25) aus erstrecken und einen Teil des Montagerahmens für die linke (21) und rechte (22) scheibe bilden.

8. Kabine für ein gepanzertes Fahrzeug nach Anspruch 7, **dadurch gekennzeichnet, dass** sich die geneigten Balken (46, 47) symmetrisch zum zentralen Balken (25) erstrecken.

9. Kabine für ein gepanzertes Fahrzeug nach einem der vorhergehenden Ansprüche, **dadurch gekennzeichnet, dass** die Schießscharte (31) eine Schutzkappe (50) umfasst, die sich über die Montagewand (36) überstehend erstreckt.

10. Gepanzertes Fahrzeug, **dadurch gekennzeichnet, dass** es mit einer Kabine (1) nach einem der Ansprüche 1 bis 9 ausgestattet ist.

## Claims

1. An armored vehicle cabin including:
· a windshield (5) extending in an inclined plane (P) between a bottom transverse wall (6) and a top transverse wall (7) that is extended by the roof of the cabin; and
· a port (31) mounted at the level of the top transverse wall (7) and including a mounting wall (36) for mounting a controlled shutter (33) for opening and closing a passage (35) provided through said wall;
the cabin being **characterized in that** the port (31) is centered relative to the windshield (5) and **in that** the mounting wall (32) of the port (31) extends in a plane (P1) different from the inclined plane (P) in which the windshield extends.

2. An armored vehicle cabin according to claim 1, **characterized in that** the windshield (5) comprises a left pane (21) and a right pane (22) separated by a central bar (25), and **in that** the port (31) is centered relative to the central bar (25).

3. An armored vehicle cabin according to claim 1 or claim 2, **characterized in that** the mounting wall (36) for mounting the port (31) extends in a plane (P1) making an angle of ±15° relative to the vertical.

4. An armored vehicle cabin according to claim 1 to 3, **characterized in that** the mounting wall (36) for mounting the port (31) includes a pane having the through hole (35) provided therein.

5. An armored vehicle cabin according to any one of claims 1 to 4, **characterized in that** the mounting wall (36) for mounting the port (31) is set back relative to the windshield (5) and is connected to the windshield (5) by a connection wall (43).

6. An armored vehicle cabin according to claim 5, **characterized in that** the connection wall (43) flares away from the mounting wall (32) for mounting the port (31).

7. An armored vehicle cabin according to claim 5 or claim 6, **characterized in that** the connection wall (43) extends to the top end of the central bar (25) and defines sloping bars (46, 47) extending from the central bar (25) and forming a portion of the frame for mounting the left and right panes (21, 22).

8. An armored vehicle cabin according to claim 7, **characterized in that** the sloping bars (46, 47) extend symmetrically relative to the central bar (25).

9. An armored vehicle cabin according to any preceding claim, **characterized in that** the port (31) includes a protective cap (50) extending above the mounting wall (36).

10. An armored vehicle, **characterized in that** it is fitted with a cabin (1) according to any one of claims 1 to 9.
